# EUROPEAN PATENT APPLICATION

(11) **EP 3 771 849 A1**
(43) Date of publication of application: **03.02.2021**
(21) Application number: 20188586.0
(22) Date of filing: 30.07.2020
(51) Int. Cl.: F16J 15/3212, F16J 15/56, F16J 9/16, F16J 15/3272

(54) **MULTIPLE PIECE SEAL RING ASSEMBLY**

(30) Priority: 31.07.2019 US 201962880904 P
(71) Applicant: Roller Bearing Company of America, Inc., Oxford, CT 06478 (US)
(72) Inventor: Reinhardt, John, Louisville, KY Kentucky 40242 (US); Brees, Samantha, Tucson, AZ Arizona 85757 (US)
(74) Representative: Ström & Gulliksson AB

(57) **Abstract**

A sealing system for sealing a cylindrically shaped surface containing a first annular seal (20) and a second annular seal (30). Each annular seal (20, 30) has a gap penetrating from the outer diameter to the inner diameter. The angle of the gap in the first annular seal (20) and the angle of the gap in the second annular seal (30), and the arrangement of the seals (20, 30) relative to an expander ring (40) and a biasing ring (50) minimizes leakage without the need for an anti-rotation pin or other means that would significantly decrease efficiency and reliability.

## Description

### Cross Reference to Related Application

This application claims the benefit of U.S. Provisional Patent Application Serial No. 62/880,904 filed on July 31, 2019, which is incorporated herein by reference in its entirety.

### Technical Field

The present invention is directed to a multiple piece seal assembly for a piston cylinder arrangement or a shaft sealing arrangement.

### Background

Piston ring and shaft sealing applications require tight gas leakage control in order for some pneumatic devices to function properly. Prior art sealing systems incorporate a number of different arrangements of sealing rings. In some prior art sealing systems, a single sealing ring engages a groove in the piston or the surrounding cylindrical bore. In other prior art sealing systems, a sealing ring is installed with an expander. Generally, the expander is a cut, compressed metal ring, which causes non-uniform pressure between the sealing ring and the cylindrical wall of the bore. Coiled springs are used in some prior art embodiments, but traditional compression springs cannot maintain the pressure as well as metal ring expanders.

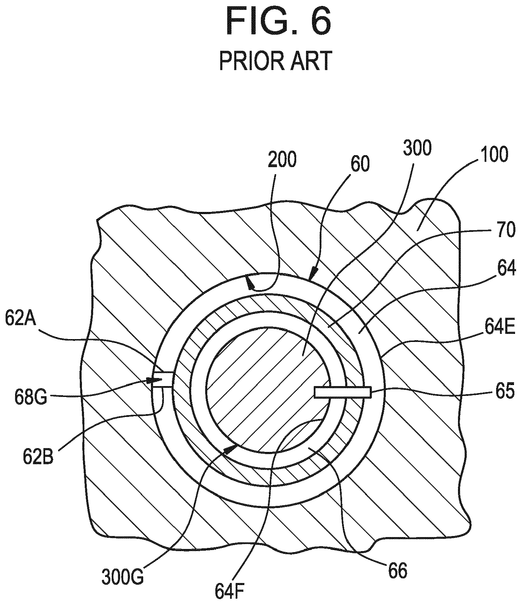

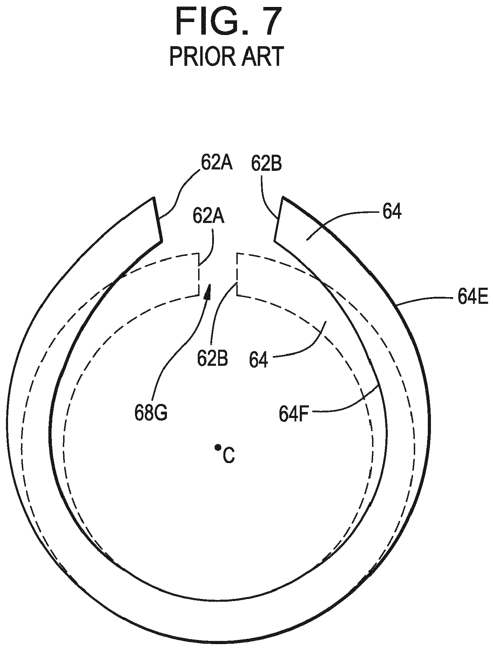

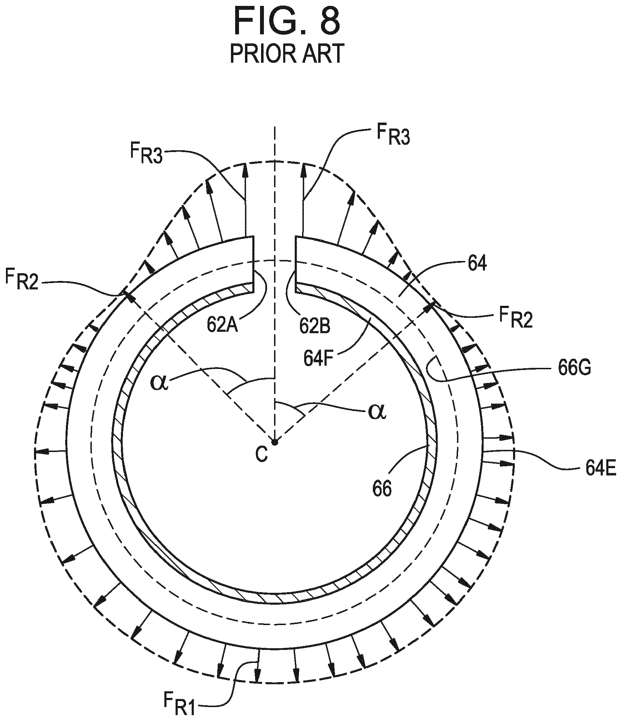

FIGS. 6-8 depict a prior art sealing system 60 that incorporates a two-piece piston sealing ring with a compressed metal ring expander 70 for use with a piston 300 within a bore 200 of a housing 100. Referring to FIG. 6, the sealing system 60 includes a cast iron or profiled sealing ring 64 and an expander ring 70. The area 66 can be an open cavity where the compressed metal expander ring 70 supplies all of the pressure to the sealing rings 64 or it can be filled with a coiled spring in compression that provides additional pressure to the expander ring 70. As a result of the necessary material, the sealing ring 64 is manufactured with a gap 68G between two seal ring ends 62A, 62B. The gap 68G reduces in size as the sealing ring 64 compresses during installation. FIG. 7 depicts the sealing ring 64 in a natural or expanded state with solid lines and an installed or compressed state in phantom. The user compresses the sealing ring 64 during installation in a surrounding cylinder (not depicted). In some embodiments, the sealing ring 64 has an inner groove 66G (depicted in FIG. 8) that is defined by a semi-circular or V-shaped cross-section to accommodate the coil spring 66 and/or the expander ring 70 (not depicted).

Referring to FIG. 8, the sealing ring 64 exerts a force F_{R} outwardly against the inside surface of the cylinder bore 200 when installed in the compressed state. The ring force F_{R} varies from a first ring force F_{R1} for a portion of the circumference to a minimum ring force F_{R2} at an angle α measured to either side of a vertical reference line. The maximum ring force F_{R3} occurs proximate to the ring ends 62A, 62B. The deformation of the sealing ring 64 to compress the exterior cylindrical surface 64E against the inner surface of the surrounding cylinder (not depicted) results in the varying ring force discussed above. This varying ring force F_{R} makes it difficult to maintain a minimum contact force between the sealing system 60 and the surrounding cylindrical wall and makes it difficult to balance the contact forces around the sealing system 60, and further complicates the alignment of multiple offset sealing rings.

The depicted ring ends 62A, 62B form a traditional butt j oint. In the prior art sealing system 60, the gap 68G in the sealing ring 64 is the major source of leakage. As a result, prior art sealing systems minimize the gap 68G and/or include multiple seal rings with offset gaps. Even with these mitigating features any direct opening in the ring 64 allows significant leakage to occur. The gap at the ring ends 62A, 62B is one of the main sources of leakage in prior art seal assemblies.

One solution to this problem, as referenced above, is to use two or more seal rings side by side in the ring groove with the gaps misaligned so that any direct flow path is blocked by an adjacent ring. However, during normal operation vibration causes the seal rings to rotate relative to one another in the ring groove causing the gaps to align. A common remedy is to clock the seal rings (fix the seal rings relative to one another) or stake an anti-rotation pin 65 (depicted in FIG. 6) by penetrating the surface of the piston groove 330G and/or by penetrating the expander ring 70 to ensure the gaps remain misaligned. In the depicted embodiment, the pin 65 penetrates both the inner surface of the piston groove 300G and the expander ring 70. The use of an anti-rotation pin 65 requires increasing the size of the ring 64 to accommodate the pin 65. The addition of the pin 65 is costly and decreases the reliability of the device.

Based on the foregoing, there is a need in the art for a sealing system that minimizes leakage and imparts a more uniform pressure on a shaft or cylinder wall, without significantly increasing costs or decreasing reliability of the device.

### Summary

There is disclosed herein a sealing system for sealing a cylindrically shaped surface. The sealing system includes a first annular seal with a first axial width W1 extending between a first axial face and a second axial face. The first annular seal has a first radial thickness T1 extending between a first inner circumferential surface and a first outer circumferential surface. A first slit extends through the first annular seal from the first axial face to the second axial face. The first slit has a length L1 greater than the first radial thickness T1. The first slit extends from the first inner circumferential surface to the first outer circumferential surface in a first direction D1. A second annular seal has a second axial width W2 extending between a third axial face and a fourth axial face. The second annular seal has a second radial thickness T2 extending between a second inner circumferential surface and a second outer circumferential surface. A second slit extends through the second annular seal from the third axial face to the fourth axial face. The second slit extends from the second inner circumferential surface to the second outer circumferential surface in a second direction D2. The second direction D2 is different than the first direction D1. The first annular seal and the second annular seal each have a single piece unitary construction and are aligned coaxially with one another. The the second axial face of the first annular seal slidingly engages the third axial face of the second annular seal so that the first annular seal and the second annular seal are rotatable relative to one another and the first slit and the second slit are locatable in a common arcuate segment thereof. An expander ring is aligned coaxially with the first annular seal and the second annular seal. The expander ring engages a portion of the first annular seal and a portion of the second annular seal. The expander ring has a third axial width W3 that is greater than the first axial width W1 and/or the second axial width W2. A biasing ring is coaxially aligned with the first annular seal and the second annular seal. The biasing ring engages the expander ring and imparts a force on the expander ring to force the first annular seal and the second annular seal against a sealing surface.

In some embodiments, the length L2 of the second slit is greater than the second radial thickness T1.

In some embodiments, the third axial width W3 of the expander ring is about equal to the sum of the first axial width W1 and the second axial width W2.

In some embodiments, the expander ring blocks a radial path (RP) of fluid between the biasing ring, the first annular seal, and the second annular seal.

In some embodiments, the first slit and/or the second slit is linear.

In some embodiments, the first annular seal and/or the second annular seal is moveable in relation to the expander ring.

In some embodiments, the first outer circumferential surface of the first annular seal and the second outer circumferential surface of the second annular seal are exterior cylindrical sealing surfaces. The first inner circumferential surface of the first annular seal and the second inner circumferential surface of the second annular seal are interior cylindrical surfaces that engage a support surface of the expander ring.

In some embodiments, the first inner circumferential surface and the second inner circumferential surface are interior cylindrical sealing surfaces. The first outer circumferential surface of the first annular seal and the second outer circumferential surface of the second annular seal engage a support surface of the expander ring.

In some embodiments, a piston and cylinder assembly includes a cylinder having a cylindrical interior sealing surface and a piston located at least partially in the cylinder and in sliding relation therewith. The piston has a groove extending radially inward into and circumferentially around the piston. The sealing system is located in the groove. The first outer circumferential surface of the first annular seal and the second outer circumferential surface of the second annular seal sealingly engage the cylindrical interior sealing surface.

In some embodiments, the shaft sealing assembly includes a housing with an interior area and a groove extending circumferentially and radially outward from the interior area into the housing. A shaft with a cylindrical exterior sealing surface is at least partially located in the interior area and in sliding relation therewith. The sealing system is located in the groove such that the first inner circumferential surface of the first annular seal and the second inner circumferential surface of the second annular seal sealingly engage the cylindrical exterior sealing surface.

In some embodiments, the biasing ring is a canted coil spring.

In one embodiment, the expander ring is designed to fit inside the assembly without being compressed as in prior art sealing devices. In this embodiment, the biasing ring provides a uniform pressure to the expander ring which then provides a uniform pressure to the sealing rings.

### Brief Description of the Drawings

FIG. 1 is an end view of a piston and cylinder that features a sealing system in accordance with the invention shown sealing in a cylinder, shown with a portion of one of the annular seals cut away;
FIG. 2 is a cross sectional view of the sealing system of FIG. 1 taken across section 2-2;
FIG. 3. is an exploded view of the orientation of the angled gaps in the sealing rings of FIGS. 1 and 2;
FIG. 4 is an end view of a shaft and a ring housing that features a sealing system in accordance with the invention shown sealing against a shaft, shown with a portion of one of the annular seals cut away;
FIG. 5 is a cross sectional view of the sealing system of FIG. 4 taken across section 5-5;
FIG. 6 is an end view of an example of the prior art showing anti-rotation pin;
FIG. 7 is a top view of a prior art sealing ring with an installed state depicted in phantom;
FIG. 8 is a top diagrammatic view of the prior art sealing ring of FIG. 6 in a compressed state depicting the ring force F_{R};
FIG. 9A is a simplified diagram of a portion the sealing ring of FIG. 1 depicting a relaxed state of the canted coil spring; and
FIG. 9B is the diagram of FIG. 9A showing a compression force Fc which causes the canted coil spring to deflect at an angle.

### Detailed Description

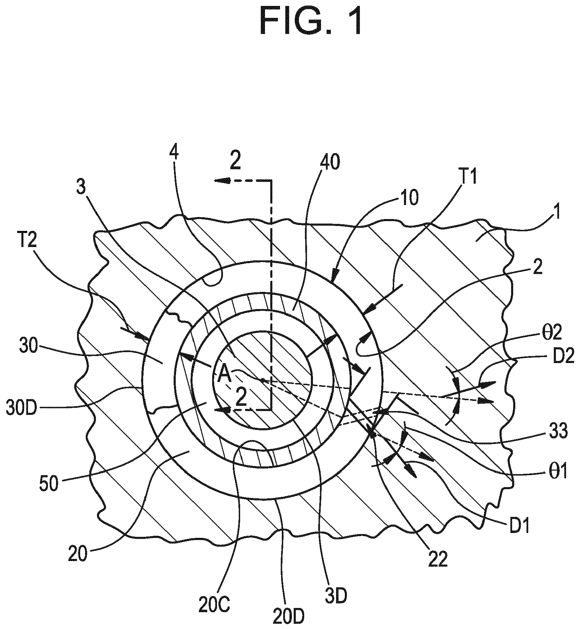

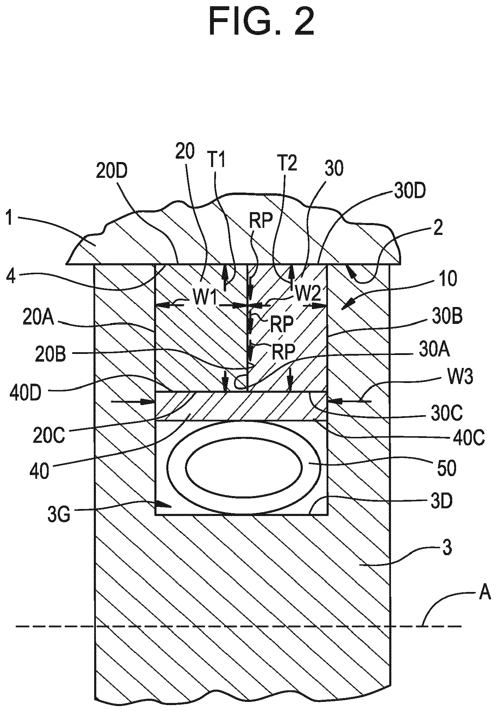

As shown in FIGS. 1-3, a sealing system for sealing a cylindrically shaped surface is designated by numeric identifier 10. The sealing system 10 is installed within a bore 2 of a housing 1. A piston 3 is centered on center point A of the bore 2 of the housing 1. In some embodiments, the piston 3 oscillates linearly within the bore 2 and is included in pneumatic valves for air operated actuators. A biasing ring 50 is disposed in a first groove 3G (depicted in FIG. 2) defined by a first outer circumferential surface 3D of the piston 3. The biasing ring 50 supports an expander ring 40, a first annular seal 20, and a second annular seal 30 within the first groove 3G (depicted in detail in FIG. 2). In the depicted embodiment, the first annular seal 20 and the second annular seal 30 radially engage and seal against the inner surface of the bore 2. The sealing system 10 eliminates the need to clock the annular seals 20, 30 in place (fix the first annular seal 20 relative to the second annular seal 30). In some embodiments, the expander ring 40 is annealed to ensure that the expander ring 40 does not exert an outward force on the annular seals 20, 30 by itself.

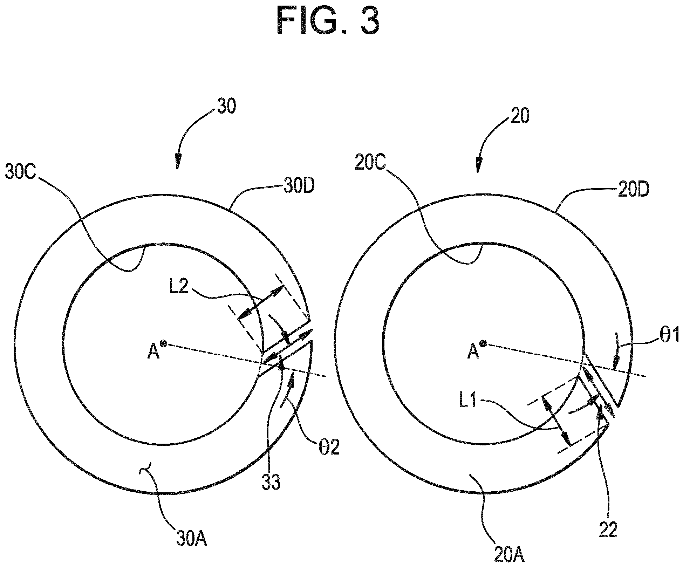

Referring to FIGS. 1 and 3, the first annular seal 20 has a first slit 22 extending from a first inner circumferential surface 20C to a first outer circumferential surface 20D along a first direction D1. The second annular seal 30 has a second slit 33 extending from a second inner circumferential surface 30C to a second outer circumferential surface 30D along a second direction D2. The first direction D1 is defined by a first seal angle θ1, measured relative to a reference line passing through the center point A and intersecting the first direction D1 at the first inner circumferential surface 20C. The second direction D2 is defined by a second seal angle θ2, measured relative to a reference line passing through the center point A and intersecting the second direction D2 at the second inner circumferential surface 30C. In the depicted embodiment, the first seal angle θ1 and the second seal angle θ2 are of equal magnitude but the first seal angle θ1 is the opposite of the second seal angle θ2.

Referring to FIG. 2, the expander ring 40 directly contacts the first inner circumferential surface 20C of first annular seal 20 and the second inner circumferential surface 30C of the second annular seal 30. The first annular seal 20 and the second annular seal 30 are arranged axially adjacent to one another within the first groove 3D. The first annular seal 20 has a first axial width W1 and a first radial thickness T1. The second annular seal 30 has a second axial width W2 and a second radial thickness T2. The first axial width W1 has substantially the same magnitude as the second axial width W2. The first radial thickness T1 has substantially the same magnitude as the second radial thickness T2. The first annular seal 20 extends the first axial width W1 between a first axial face 20A and a second axial face 20B. The second annular seal 30 extends between a third axial face 30A and a fourth axial face 30B.

The first annular seal 20, 20' and the second annular seal 30, 30' each have a single piece unitary construction (i.e., are formed as one piece with no sub-segments). The The first annular seal 20, 20' and the second annular seal 30, 30' are aligned coaxially with one another. The second axial face 20B, 20B' of the first annular seal 20, 20' slidingly engages (e.g., rotational sliding engagement) the third axial face 30A, 30A' of the second annular seal 30, 30' so that the first annular seal 20, 20' and the second annular seal 30, 30' are rotatable relative to one another and the first slit 22, 22' and the second slit 33, 33' are locatable in a common arcuate segment thereof.

The expander ring 40 has a third width W3 and extends between a third inner circumferential surface 40C and a third outer circumferential surface 40D. In the depicted embodiment, W3 is larger in magnitude than W1 and/or W2.

Referring to FIG. 3, the first slit 22 has a first length L1 measured along the first slit 22 and the second slit 33 has a second length L2 measured along the second slit 33. In the depicted embodiment, the first length L1 and the second length L2 are substantially equal to one another. In some embodiments, the first length L1 is greater than the first radial thickness T1 and/or the second length L2 is greater than the second radial thickness T2. Referring to FIG. 2, the depicted ring assembly includes two seal rings 20, 30 having substantially the same dimensions, installed over a common expander ring 40. The depicted expander ring 40 engages at least a portion of the first annular seal 20 and a portion of the second annular seal 30. This assembly of the expander ring 40, the first annular seal 20, and the second annular seal 30 is loaded by a canted coil spring or biasing ring 50. The first slit 22 and the second slit 33 are cut at angles that prevent the complete alignment of the ring gaps that would then increase the leakage rate. Specifically, the first seal angle θ1 and the second seal angle θ2, depicted in detail in FIGS. 1 and 3, prevent complete alignment of the first slit 22 and the second slit 33. The depicted gap alignment eliminates the need for an anti-rotation device to prevent alignment of the gaps, as required in the prior art. In the depicted embodiment, the first annular seal 20 and/or the second annular seal 30 is moveable in relation to the expander ring 40. The location of the biasing ring 50 relative to the expander ring 40, the first annular seal 20, and the second annular seal 30 provides uniform radial loading, improving the conformance of the exterior circumferential surface of the first and second annular seal 20, 30 to the cylindrical surface of the bore 2. In the depicted embodiment, the first slit 22 and the second slit 33 are defined by linear gaps in the first annular seal 20 and the second annular seal 30. Other shapes defining the first slit 22 and/or the second slit 33 do not depart significantly from the disclosure contained herein.

Referring to FIG. 2, the biasing ring 50 engages the first outer circumferential surface 3D and the third inner circumferential surface 40C of the expander ring 40. The biasing ring 50 exerts a biasing force radially outward away from first outer circumferential surface 3D of the piston 3 against the expander ring 40. The expander ring 40 directs the biasing force through first annular seal 20 and second annular seal 30, sealing against the inside surface of the bore 2 of the housing 1. In the depicted embodiment, the biasing ring 50 is a canted coil spring. The compression of a canted coil spring is much more controllable and the size is much smaller than traditional coil springs. The combination of the biasing ring 50, the expander ring 40, the first annular seal 20, and the second annular seal 30 within the first groove 3G is unique, providing a uniform applied pressure to the annular seals 20, 30. This uniform applied pressure is necessary to minimize wear in linear oscillating applications, in which the piston 3 repeatedly oscillates along the inside surface 4 defined by the bore 2. Friction between the annular seals 20, 30 and the inside surface 4 defined by the bore 2 causes wear of the annular seals 20, 30 and/or inside surface 4. Linear oscillating applications are very sensitive to friction and wear. Any high pressure spots between the sealing ring(s) and the cylinder causes friction and more wear. Too much pressure overall also generates significant friction and wear. The biasing ring 50 incorporated into the sealing system 10 disclosed herein controls the contact pressure between the sealing system 10 and the inside surface 4 to be more uniform and to minimize the magnitude of the friction.

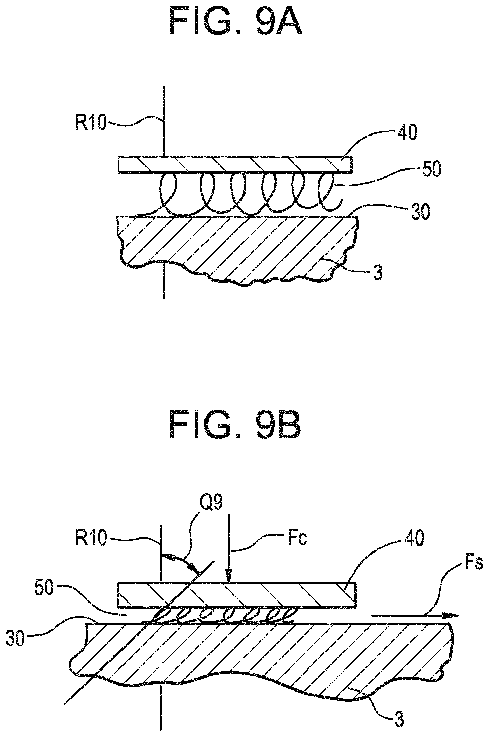

FIGS. 9A and 9B depict diagrams of the biasing ring 50 in the form of a canted coil spring before and after a compression force Fc acts on the expander ring 40, respectively. The canted coil type biasing ring 50 is superior to a coiled spring 66 design and offers much better control over the pressure magnitude. The canted coil type biasing ring 50 exerts the force by changing angle Q9 (i.e., canting angle) relative to reference line R10, not by stretching or compression as with the traditional coil spring 66. A traditional coiled spring 66 cannot contact both the expander ring 70 and the outer circumferential surface of the piston 300. The inner surface of the coil spring 66 must be free. The compression of a long, slender coiled spring 66 cannot exert as much pressure as an element that contacts both the outer circumferential surface of the piston 300 and the inner circumferential surface of the expander ring 70. A coiled spring force Fs is very limited in compression due to buckling.

FIG. 2 also depicts a radial path (RP) in which fluid flows from the housing 1, through the first annular seal 20, the second annular seal 30. In the depicted embodiment, the expander ring 40 blocks the radial path (RP) of fluid between the biasing ring 50 and the first annular seal 20 and between the biasing ring 50 and the second annular seal 30. In the embodiment depicted in FIGS. 1-3, the biasing ring 50 is coaxially aligned with the piston 3, the expander ring 40, the first annular seal 20, and the second annular seal 30.

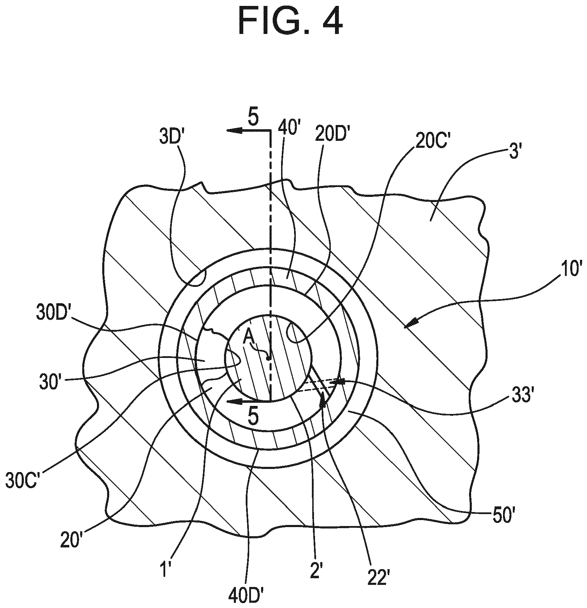

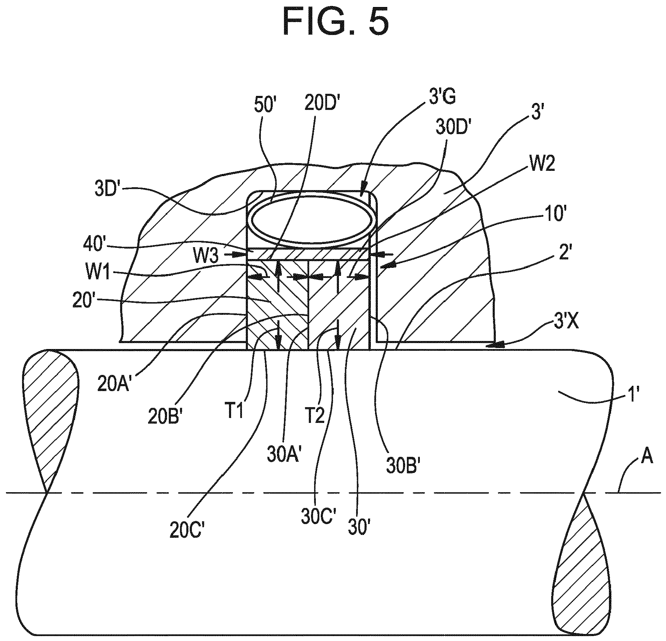

Referring to FIGS. 4 and 5, the sealing system 10' is also compatible with ring assemblies that seal on a shaft 1'. A housing 3' has an interior area 3'X, located radially between the housing 3' and the shaft 1'. A groove 3'G extends circumferentially and radially outwards from the interior area 3'X into the housing 3'. The shaft 1' has a cylindrical exterior sealing surface 2' and the shaft 1' is disposed at least partially within the interior area 3'X and is in sliding relation with the interior area 3'X. A sealing system 10' is retained in the groove 3'G such that the first inner circumferential surface 20C' of the first annular seal 20' and the second inner circumferential surface 30C' of the second annular seal 30' sealingly engage the cylindrical exterior sealing surface 2'.

The following clauses that are listed as items represent embodiments of the present invention.
Item 1 - A sealing system (10, 10') for sealing a cylindrically shaped surface, the sealing system (10, 10') comprising: (a) a first annular seal (20, 20') having a first axial width (W1) extending between a first axial face (20A, 20A') and a second axial face (20B, 20B'), the first annular seal (20, 20') having a first radial thickness (T1) extending between a first inner circumferential surface (20C, 20C') to a first outer circumferential surface (20D, 20D'), a first slit (22, 22') extending through the first annular seal (20, 20') from the first axial face (20A, 20A') to the second axial face (20B, 20B'), the first slit (22, 22') having a length (LI) greater than the first radial thickness (T1), the first slit (22, 22') extending from the first inner circumferential surface (20C) to the first outer circumferential surface (20D, 20D') in a first direction (D1); (b) a second annular seal (30, 30') having a second axial width (W2) extending between a third axial face (30A, 30A') and a fourth axial face (30B, 30B'), the second annular seal (30, 30') having a second radial thickness (T2) extending between a second inner circumferential surface (30C, 30C') to a second outer circumferential surface (30D, 30D'), a second slit (33, 33') extending through the second annular seal (30, 30') from the third axial face (30A, 30A') to the fourth axial face (30B, 30B'), the second slit (33, 33') extending from the second inner circumferential surface (30C, 30C') to the second outer circumferential surface (30D, 30D') in a second direction (D2), the second direction (D2) being different than the first direction (D1); (c) the first annular seal (20, 20') and the second annular seal (30, 30') each having a single piece unitary construction and being aligned coaxially with one another and with the second axial face (20B, 20B') of the first annular seal (20, 20') slidingly engaging the third axial face (30A, 30A') of the second annular seal (30, 30') so that the first annular seal (20, 20') and the second annular seal (30, 30') are rotatable relative to one another and the first slit (22, 22') and the second slit (33, 33') are locatable in a common arcuate segment thereof; (d) an expander ring (40, 40') being aligned coaxially with the first annular seal (20, 20') and the second annular seal (30, 30'), the expander ring (40, 40') engaging a portion of the first annular seal (20, 20') and a portion of the second annular seal (30, 30'), the expander ring (40, 40') having a third axial width (W3) that is greater than at least one of the first axial width (W1) and the second axial width (W2); and (e) a biasing ring (50, 50') being aligned coaxially with the first annular seal (20, 20') and the second annular seal (30, 30'), the biasing ring (50, 50') engaging the expander ring (40, 40') and imparting a force on the expander ring (40, 40') to force the first annular seal (20, 20') and the second annular seal (30,30') against a sealing surface (2, 2').
Item 2 - The sealing system (10, 10') of item 1, wherein the second slit (33, 33') has a second length (L2) greater than the second radial thickness (T2).
Item 3 - The sealing system (10, 10') of item 1, wherein the third axial width (W3) of the expander ring (40, 40') is about equal to a sum of the first axial width (W1) and the second axial width (W2).
Item 4 - The sealing system (10, 10') of item 1, wherein the expander ring (40, 40') is configured to block a radial path (RP) of fluid between the biasing ring (50, 50') and the first annular seal (20, 20') and the second annular seal (30, 30').
Item 5 - The sealing system (10, 10') of item 1, wherein at least one of the first slit (22, 22') and the second slit (33, 33') is linear.
Item 6 - The sealing system (10, 10') of item 1, wherein at least one of the first annular seal (20, 20') and the second annular seal (30, 30') is moveable in relation to the expander ring (40, 40').
Item 7 -The sealing system (10) of item 1, wherein the first outer circumferential surface (20D) of the first annular seal (20) and the second outer circumferential surface (30D) of the second annular seal (30) are exterior cylindrical sealing surfaces; and the first inner circumferential surface (20C) of the first annular seal (20) and the second inner circumferential surface (30C) of the second annular seal (30) are interior cylindrical surfaces that engage a support surface (40D) of the expander ring (40).
Item 8 - The sealing system (10, 10') of item 1, wherein the expander ring (40 40') is annealed such that it exerts no force on the sealing rings (20, 20', 30, 30') when in an installed position.
Item 9 - The sealing system (10') of item 1, wherein the first inner circumferential surface (20C') and the second inner circumferential surface (30C') are interior cylindrical sealing surfaces; and the first outer circumferential surface (20D') of the first annular seal (20') and the second outer circumferential surface (30D') of the second annular seal (30') engage a support surface (40D') of the expander ring (40').
Item 10 - The sealing system (10, 10') of item 1, wherein the biasing ring (50, 50') is a canted coil spring.
Item 11 - A piston and cylinder assembly comprising: a cylinder (1) having a cylindrical interior sealing surface (2); a piston (3) disposed at least partially in the cylinder (1) and in sliding relation therewith, the piston (3) having a groove (3G) extending radially inward into and circumferentially around the piston (3); a sealing system (10, 10') comprising: (a) a first annular seal (20, 20') having a first axial width (W1) extending between a first axial face (20A, 20A') and a second axial face (20B, 20B'), the first annular seal (20, 20') having a first radial thickness (T1) extending between a first inner circumferential surface (20C, 20C') to a first outer circumferential surface (20D, 20D'), a first slit (22, 22') extending through the first annular seal (20, 20') from the first axial face (20A, 20A') to the second axial face (20B, 20B'), the first slit (22, 22') having a length (LI) greater than the first radial thickness (T1), the first slit (22, 22') extending from the first inner circumferential surface (20C) to the first outer circumferential surface (20D, 20D') in a first direction (D1); (b) a second annular seal (30, 30') having a second axial width (W2) extending between a third axial face (30A, 30A') and a fourth axial face (30B, 30B'), the second annular seal (30, 30') having a second radial thickness (T2) extending between a second inner circumferential surface (30C, 30C') to a second outer circumferential surface (30D, 30D'), a second slit (33, 33') extending through the second annular seal (30, 30') from the third axial face (30A, 30A') to the fourth axial face (30B, 30B'), the second slit (33, 33') extending from the second inner circumferential surface (30C, 30C') to the second outer circumferential surface (30D, 30D') in a second direction (D2), the second direction (D2) being different than the first direction (D1); (c) the first annular seal (20, 20') and the second annular seal (30, 30') each having a single piece unitary construction and being aligned coaxially with one another and with the second axial face (20B, 20B') of the first annular seal (20, 20') slidingly engaging the third axial face (30A, 30A') of the second annular seal (30, 30') so that the first annular seal (20, 20') and the second annular seal (30, 30') are rotatable relative to one another and the first slit (22, 22') and the second slit (33, 33') are locatable in a common arcuate segment thereof; (d) an expander ring (40, 40') being aligned coaxially with the first annular seal (20, 20') and the second annular seal (30, 30'), the expander ring (40,40') engaging a portion of the first annular seal (20, 20') and a portion of the second annular seal (30, 30'), the expander ring (40, 40') having a third axial width (W3) that is greater than at least one of the first axial width (W1) and the second axial width (W2); and (e) a biasing ring (50,50') being aligned coaxially with the first annular seal (20, 20') and the second annular seal (30, 30'), the biasing ring (50, 50') engaging the expander ring (40, 40') and imparting a force on the expander ring (40, 40') to force the first annular seal (20, 20') and the second annular seal (30, 30') against the cylindrical interior sealing surface (2);the sealing system (10) being disposed in the groove (3G) such that the first outer circumferential surface (20D) of the first annular seal (20) and second outer circumferential surface (30D) of the second annular seal (30) sealingly engage the cylindrical interior sealing surface (2).
Item 12 - The piston and cylinder assembly of item 11, wherein the second slit (33, 33') has a second length (L2) greater than the second radial thickness (T2).
Item 13 - The piston and cylinder assembly of item 11, wherein the third axial width (W3) of the expander ring (40, 40') is about equal to a sum of the first axial width (W1) and the second axial width (W2).
Item 14 - The piston and cylinder assembly of item 11, wherein the expander ring (40, 40') is configured to block a radial path (RP) of fluid between the biasing ring (50, 50') and the first annular seal (20, 20') and the second annular seal (30, 30').
Item 15 - The piston and cylinder assembly of item 11, wherein at least one of the first slit (22, 22') and the second slit (33, 33') is linear.
Item 16 - The piston and cylinder assembly of item 11, wherein at least one of the first annular seal (20, 20') and the second annular seal (30, 30') is moveable in relation to the expander ring (40, 40').
Item 17 - The piston and cylinder assembly of item 11, wherein the first outer circumferential surface (20D) of the first annular seal (20) and the second outer circumferential surface (30D) of the second annular seal (30) are exterior cylindrical sealing surfaces; and the first inner circumferential surface (20C) of the first annular seal (20) and the second inner circumferential surface (30C) of the second annular seal (30) are interior cylindrical surfaces that engage a support surface (40D) of the expander ring (40).
Item 18 - The piston and cylinder assembly of item 11, wherein the expander ring (40 40') is annealed such that it exerts no force on the sealing rings (20, 20', 30, 30') when in an installed position.
Item 19 - A shaft sealing assembly comprising: a housing (3') having an interior area (3'X) and a groove (3'G) extending circumferentially around and radially outward from the interior area (3'X) into the housing (3'); a shaft (1') having a cylindrical exterior sealing surface (2'), the shaft (1') disposed at least partially in the interior area (3'X) and in sliding relation therewith; a sealing system (10, 10') comprising: (a) a first annular seal (20, 20') having a first axial width (W1) extending between a first axial face (20A, 20A') and a second axial face (20B, 20B'), the first annular seal (20, 20') having a first radial thickness (T1) extending between a first inner circumferential surface (20C, 20C') to a first outer circumferential surface (20D, 20D'), a first slit (22, 22') extending through the first annular seal (20, 20') from the first axial face (20A, 20A') to the second axial face (20B, 20B'), the first slit (22, 22') having a length (LI) greater than the first radial thickness (T1), the first slit (22, 22') extending from the first inner circumferential surface (20C) to the first outer circumferential surface (20D, 20D') in a first direction (D1); (b) a second annular seal (30, 30') having a second axial width (W2) extending between a third axial face (30A, 30A') and a fourth axial face (30B, 30B'), the second annular seal (30, 30') having a second radial thickness (T2) extending between a second inner circumferential surface (30C, 30C') to a second outer circumferential surface (30D, 30D'), a second slit (33, 33') extending through the second annular seal (30, 30') from the third axial face (30A, 30A') to the fourth axial face (30B, 30B'), the second slit (33, 33') extending from the second inner circumferential surface (30C, 30C') to the second outer circumferential surface (30D, 30D') in a second direction (D2), the second direction (D2) being different than the first direction (D1); (c) the first annular seal (20, 20') and the second annular seal (30, 30') each having a single piece unitary construction and being aligned coaxially with one another and with the second axial face (20B, 20B') of the first annular seal (20, 20') slidingly engaging the third axial face (30A, 30A') of the second annular seal (30, 30') so that the first annular seal (20, 20') and the second annular seal (30, 30') are rotatable relative to one another and the first slit (22, 22') and the second slit (33, 33') are locatable in a common arcuate segment thereof; (d) an expander ring (40, 40') being aligned coaxially with the first annular seal (20, 20') and the second annular seal (30, 30'), the expander ring (40,40') engaging a portion of the first annular seal (20, 20') and a portion of the second annular seal (30, 30'), the expander ring (40, 40') having a third axial width (W3) that is greater than at least one of the first axial width (W1) and the second axial width (W2); and (e) a biasing ring (50, 50') being aligned coaxially with the first annular seal (20, 20') and the second annular seal (30, 30'), the biasing ring (50, 50') engaging the expander ring (40, 40') and imparting a force on the expander ring (40, 40') to force the first annular seal (20, 20') and the second annular seal (30, 30') against the cylindrical exterior sealing surface (2');the sealing system (10') being disposed in the groove (3'G) such that the first inner circumferential surface (20C') of the first annular seal (20') and the second inner circumferential surface (30C') of the second annular seal (30') sealingly engage the cylindrical exterior sealing surface (2').
Item 20 - The shaft sealing assembly of item 19, wherein the second slit (33, 33') has a second length (L2) greater than the second radial thickness (T2).
Item 21 - The shaft sealing assembly of item 19, wherein the third axial width (W3) of the expander ring (40, 40') is about equal to a sum of the first axial width (W1) and the second axial width (W2).
Item 22 - The shaft sealing assembly of claim 19, wherein the expander ring (40, 40') is configured to block a radial path (RP) of fluid between the biasing ring (50, 50') and the first annular seal (20, 20') and the second annular seal (30, 30').
Item 23 -The shaft sealing assembly of claim 19, wherein at least one of the first slit (22, 22') and the second slit (33, 33') is linear.
Item 24 - The shaft sealing assembly of item 19, wherein at least one of the first annular seal (20, 20') and the second annular seal (30, 30') is moveable in relation to the expander ring (40, 40').
Item 25 - The shaft sealing assembly of item 19, wherein the expander ring (40 40') is annealed such that it exerts no force on the sealing rings (20, 20', 30, 30') when in an installed position.
Item 26 - The shaft sealing assembly of item 19, wherein the first inner circumferential surface (20C') and the second inner circumferential surface (30C') are interior cylindrical sealing surfaces; and the first outer circumferential surface (20D') of the first annular seal (20') and the second outer circumferential surface (30D') of the second annular seal (30') engage a support surface (40D') of the expander ring (40').
Item 27 - The shaft sealing assembly of item 19, wherein the biasing ring (50, 50') is a canted coil spring.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A sealing system for sealing a cylindrically shaped surface, the sealing system (10, 10') comprising:
(a) a first annular seal (20; 20') having a first axial width (W1) extending between a first axial face (20A; 20A') and a second axial face (20B; 20B'), the first annular seal (20; 20') having a first radial thickness (T1) extending between a first inner circumferential surface (20C; 20C') to a first outer circumferential surface (20D; 20D'), a first slit (22; 22') extending through the first annular seal (20; 20') from the first axial face (20A; 20A') to the second axial face (20B; 20B'), the first slit (22; 22') having a length (LI) greater than the first radial thickness (T1), the first slit (22; 22') extending from the first inner circumferential surface (20C) to the first outer circumferential surface (20D; 20D') in a first direction (D1);
(b) a second annular seal (30; 30') having a second axial width (W2) extending between a third axial face (30A; 30A') and a fourth axial face (30B; 30B'), the second annular seal (30; 30') having a second radial thickness (T2) extending between a second inner circumferential surface (30C; 30C') to a second outer circumferential surface (30D; 30D'), a second slit (33; 33') extending through the second annular seal (30; 30') from the third axial face (30A; 30A') to the fourth axial face (30B; 30B'), the second slit (33; 33') extending from the second inner circumferential surface (30C; 30C') to the second outer circumferential surface (30D; 30D') in a second direction (D2), the second direction (D2) being different than the first direction (D1);
(c) the first annular seal (20; 20') and the second annular seal (30; 30') each having a single piece unitary construction being aligned coaxially with one another and with the second axial face (20B; 20B') of the first annular seal (20; 20') slidingly engaging the third axial face (30A; 30A') of the second annular seal (30; 30') so that the first annular seal (20; 20') and the second annular seal (30; 30') are rotatable relative to one another and the first slit (22; 22') and the second slit (33; 33') are locatable in a common arcuate segment thereof;
(d) an expander ring (40; 40') being aligned coaxially with the first annular seal (20; 20') and the second annular seal (30; 30'), the expander ring (40; 40') engaging a portion of the first annular seal (20; 20') and a portion of the second annular seal (30; 30'), the expander ring (40; 40') having a third axial width (W3) that is greater than at least one of the first axial width (W1) and the second axial width (W2); and
(e) a biasing ring (50; 50') being aligned coaxially with the first annular seal (20; 20') and the second annular seal (30; 30'), the biasing ring (50; 50') engaging the expander ring (40; 40') and imparting a force on the expander ring (40; 40') to force the first annular seal (20; 20') and the second annular seal (30; 30') against a sealing surface (2; 2').

2. The sealing system of claim 1, wherein the second slit (33; 33') has a second length (L2) greater than the second radial thickness (T2).

3. The sealing system of claim 1 or 2, wherein the third axial width (W3) of the expander ring (40; 40') is about equal to a sum of the first axial width (W1) and the second axial width (W2).

4. The sealing system of any one of the preceding claims, wherein the expander ring (40; 40') is configured to block a radial path (RP) of fluid between the biasing ring (50; 50') and the first annular seal (20; 20') and the second annular seal (30; 30').

5. The sealing system of any one of the preceding claims, wherein at least one of the first slit (22; 22') and the second slit (33; 33') is linear.

6. The sealing system of any one of the preceding claims, wherein at least one of the first annular seal (20; 20') and the second annular seal (30; 30') is moveable in relation to the expander ring (40; 40').

7. The sealing system of any one of the preceding claims, wherein the first outer circumferential surface (20D) of the first annular seal (20) and the second outer circumferential surface (30D) of the second annular seal (30) are exterior cylindrical sealing surfaces; and the a first inner circumferential surface (20C) of the first annular seal (20) and the second inner circumferential surface (30C) of the second annular seal (30) are interior cylindrical surfaces that engage a support surface (40D) of the expander ring (40).

8. The sealing system of any one of the preceding claims, wherein the expander ring (40; 40') is annealed such that it exerts no force on the sealing rings (20, 30; 20', 30') when in an installed position.

9. The sealing system of any one of the preceding claims, wherein the first inner circumferential surface (20C') and the second inner circumferential surface (30C') are interior cylindrical sealing surfaces; and the first outer circumferential surface (20D') of the first annular seal (20') and the second outer circumferential surface (30D') of the second annular seal (30') engage a support surface (40D') of the expander ring (40').

10. The sealing system of any one of the preceding claims, wherein the biasing ring (50; 50') is a canted coil spring.

11. A piston and cylinder assembly comprising:
a cylinder (1) having a cylindrical interior sealing surface (2);
a piston (3) disposed at least partially in the cylinder (1) and in sliding relation therewith, the piston (3) having a groove (3G) extending radially inward into and circumferentially around the piston (3);
the sealing system (10) of any one of claims 1-8 and 10 disposed in the groove (3G) such that the first outer circumferential surface (20D) of the first annular seal (20) and second outer circumferential surface (30D) of the second annular seal (30) sealingly engage the cylindrical interior sealing surface (2).

12. A shaft sealing assembly comprising:
a housing (3') having an interior area (3'X) and a groove (3'G) extending circumferentially and radially outward from the interior area (3'X) into the housing (3');
a shaft (1') having a cylindrical exterior sealing surface (2'), the shaft (1') disposed at least partially in the interior area (3'X) and in sliding relation therewith;
the sealing system (10') of any one of claims 1-6, 8, 9 and 10 disposed in the groove (3'G) such that the first inner circumferential surface (20C') of the first annular seal (20') and the second inner circumferential surface (30C') of the second annular seal (30') sealingly engage the cylindrical exterior sealing surface (2').
